# EUROPEAN PATENT APPLICATION

(11) **EP 2 615 274 A1**
(43) Date of publication of application: **17.07.2013**
(21) Application number: 10856947.6
(22) Date of filing: 06.09.2010
(51) Int. Cl.: F02B 39/16

(54) **CONTROL DEVICE FOR INTERNAL-COMBUSTION ENGINE**

(71) Applicant: TOYOTA JIDOSHA KABUSHIKI KAISHA, Aichi-ken, 471-8571 (JP)
(72) Inventor: YAMAMOTO, Kosuke, Toyota-shi Aichi-ken 471-8571 (JP); IWATA, Akitoshi, Toyota-shi Aichi-ken 471-8571 (JP)
(74) Representative: Intès, Didier Gérard André
(86) International application number: PCT/JP2010/065262
(87) International publication number: WO 2012/032597

(57) **Abstract**

An apparatus (100) for controlling an internal combustion engine (200), the internal combustion engine provided with: a supercharger (300) provided with a turbine disposed on an exhaust passage (204), having an exhaust-side variable vane mechanism (303, 304) capable of adjusting exhaust pressure in accordance with its opening / closing state, and a compressor disposed on an intake passage (205), having an intake-side vane mechanism (308, 309) in a diffuser part of the compressor, capable of adjusting an air flow quantity in accordance with its opening / closing state; and a detecting device (211) capable of detecting actual supercharging pressure of the supercharger on a downstream side of the compressor, is provided with: a controller which is configured to specify a time transition of the detected actual supercharging pressure in a period in which a change speed of target supercharging pressure of the supercharger is greater than or equal to a predetermined value and determine abnormality of at least one of the turbine and the compressor on the basis of the specified time transition.

## Description

### Technical Field

The present invention relates to an apparatus for controlling an internal combustion engine provided with a supercharger, and particularly to an apparatus for controlling an internal combustion engine capable of detecting abnormality of the supercharger.

### Background Art

There is disclosed a supercharger provided with: a variable nozzle ring disposed at an exhaust gas entrance of the supercharger; inlet guide vanes disposed at a blower entrance of the supercharger; and a diffuser ring disposed at a vane wheel entrance of the supercharger (e.g. refer to Patent document 1).

On the other hand, Patent document 2 discloses a technology of determining or judging the presence or absence of vane fixing in a mechanism for adjusting this type of supercharging pressure disposed on an exhaust passage, on the basis of an error between supercharging pressure in a normal case and an actual supercharging pressure. Moreover, in the same manner, regarding the determination of the vane fixing on the exhaust side, for example, Patent document 3 discloses a technology of determining the presence or absence of the vane fixing, on the basis of whether or not a difference between a reference value, which is calculated in accordance with a target supercharging amount, and an actual command is within a range set in advance, when an actual supercharging amount is controlled to approach the target supercharging amount.

Incidentally, there is also disclosed a configuration in which an opening degree of the variable diffuser is obtained on the basis of a pressure ratio and a flow quantity (e.g. refer to Patent document 4).

Moreover, from the viewpoint of fail-safe of the supercharger, there is also disclosed a technology of stopping the operation of an electric compressor when a failure of a turbo supercharger is determined, and of changing an operational state of an internal combustion engine to an evacuation or limp-home mode in which an engine output is limited (e.g. refer to Patent document 5).

### Prior Art Document

### Patent Document

Patent document 1: Japanese Patent Application Laid Open No. Sho 61-205330
Patent document 2: Japanese Patent Application Laid Open No. 2005-315163
Patent document 3: Japanese Patent Application Laid Open No. 2005-273568
Patent document 4: Japanese Patent Application Laid Open No. Hei 9-079178
Patent document 5: Japanese Patent Application Laid Open No. 2006-188989

### Disclosure of Invention

### Subject to be Solved by the Invention

In the supercharger provided with the vane mechanism for adjusting the supercharging pressure on each of the exhaust side and the intake side, as disclosed in the Patent document 1, the vane fixing on the exhaust side and the vane fixing on the intake side are the same in that behavior of the actual supercharging pressure changes in comparison with the normal case. Therefore, in determining the presence or absence of the vane fixing in this type of supercharger, it is actually hardly possible to distinguish which side of the exhaust side and the intake side has the vane fixing, regardless of the use of a physical quantity, a controlled variable, an index value, or the like corresponding to a deviation between the target supercharging pressure and the actual supercharging pressure at that time, as disclosed in the Patent document 2 or 3 described above.

Here, if it is only necessary to detect the vane fixing, it is conceivable that a sensor capable of detecting a vane opening degree is provided on each of the exhaust side and the intake side. However, in view of general vehicle development limitations, such as costs or vehicle mountability, it is hard to separately dispose a detecting device specializing in failure detection.

In other words, a conventional technical idea including the technical ideas disclosed in the various patent documents has such a technical problem that it is substantially hardly possible to perform accurate failure detection without increasing costs or without deteriorating the vehicle mountability, in the supercharger provided with the vane mechanisms in which the opening degree is variable on both the exhaust side and the intake side. Due to the problem as described above, it is hard to take appropriate measures in actually operating the internal combustion engine equipped with this type of supercharger, and inevitably, the degree of a performance degradation of the internal combustion engine tends to increase at the time of this type of failure.

In view of the aforementioned problems, it is therefore an object of the present invention to provide an apparatus for controlling an internal combustion engine in which it is possible to accurately distinguish between the vane fixing of the intake-side vane mechanism and the vane fixing of the exhaust-side vane mechanism, in a supercharger provided with the vane mechanisms for adjusting supercharging pressure on both the intake side and the exhaust side, such as, for example, a supercharger provided with a variable nozzle turbine (VNT) on the exhaust side and a variable geometry compressor (VGC) on the intake side.

### Means for Solving the Subject

The above object of the present invention can be achieved by an apparatus for controlling an internal combustion engine, the internal combustion engine comprising: a supercharger comprising a turbine disposed on an exhaust passage, having an exhaust-side variable vane mechanism capable of adjusting exhaust pressure in accordance with its opening / closing state, and a compressor disposed on an intake passage, having an intake-side vane mechanism in a diffuser part of the compressor, capable of adjusting an air flow quantity in accordance with its opening / closing state; and a detecting device capable of detecting actual supercharging pressure of the supercharger on a downstream side of the compressor, said apparatus comprising: a controller which is configured to specify a time transition of the detected actual supercharging pressure in a period in which a change speed of target supercharging pressure of the supercharger is greater than or equal to a predetermined value and determine abnormality of at least one of the turbine and the compressor on the basis of the specified time transition.

In the present invention, the "internal combustion engine" conceptually includes an engine capable of converting thermal energy of fuel into kinetic energy and extracting it as power. Particularly, the internal combustion engine is an engine configured to use the fuel containing methane in the exhaust gas. Practical aspects of the internal combustion engine, such as, for example, a fuel type, a fuel combustion form, the number of cylinders, cylinder arrangement, an ignition aspect, a fuel supply aspect, a configuration of a valve train, and a configuration of an intake / exhaust system, are not limited at all as long as the supercharger of the present invention is provided.

The apparatus for controlling the internal combustion engine of the present invention is an apparatus for controlling the internal combustion engine, and can adopt practical aspects, such as one or a plurality of central processing units (CPU), micro processing units (MPU), electronic control units (ECU), various processors, various controllers, or the like. Incidentally, they may further have built-in or attached various memory devices, such as a read only memory (ROM), a random access memory (RAM), a buffer memory, or a flash memory, if necessary.

The "supercharger" of the present invention is a supercharging device provided with the turbine, such as a VNT, having the exhaust-side variable vane mechanism on the exhaust passage, and the compressor, such as a VGC, having the intake-side variable vane mechanism on the intake passage. Incidentally, both the exhaust-side and intake-side "vane mechanisms" can preferably include a plurality of vanes for varying a flow passage area associated with a flow passage of a working fluid, an opening / closing mechanism for opening and closing the vanes, a driving apparatus for providing a driving force to the opening / closing mechanism, and the like.

Incidentally, the internal combustion engine of the present invention is provided with the detecting device, such as a supercharging pressure sensor (pressure sensor), capable of detecting pressure of intake air on a downstream side of the compressor, i.e. the actual supercharging pressure of the supercharger. The downstream side is, namely, a cylinder side, and the detecting device is laid at a compressor exit or in the vicinity thereof, on an upstream side or downstream side of an intercooler, on an upstream/downstream side of a throttle valve, on an intake manifold, or the like. The detecting device can be naturally provided for the internal combustion engine having the supercharger.

According to the apparatus for controlling the internal combustion engine of the present invention, the controller specifies the time transition of the detected actual supercharging pressure in the aforementioned period. Incidentally, the term, "specify" associated with the controller conceptually includes detect, calculate, derive, identify, estimate, select, or obtain, without any limitation in a practical aspect thereof. The term "specify" means determining a value as a value which can be referred to in terms of control.

Here, the aforementioned period of the present invention is a period in which the change speed (which is a change amount per unit time and which may be replaced by the change amount if the unit time as a criterion is defined) of the target supercharging pressure of the supercharger is greater than or equal to the predetermined value. In some cases, the period matches a period in which a vehicle equipped with the internal combustion engine actually requires acceleration, as a preferred form. Conceptually, however, the vehicle is not necessarily in an acceleration state or does not necessarily require the acceleration. The aforementioned period is, namely, a period in which the target supercharging pressure changes (increases) to the extent that abnormal determination of the supercharger based on the time transition of the actual supercharging pressure can keep significant. Therefore, the "predetermined value" associated with the period may be, for example, a value which can be set on an experimental, experiential, theoretical, or simulation basis, or the like in advance.

On the other hand, the "time transition of the actual supercharging pressure" means a change aspect, a change state, a change characteristic, or the like not only of the actual supercharging pressure at one time point on a time series, but also of the actual supercharging pressure which is quantitatively defined in a finite time range. In other words, the "time transition of the actual supercharging pressure" requires past actual supercharging pressure at least in some way to make a definition, although practical aspects thereof can broadly range, such as a change amount, a change rate, or a time required for the change of the actual supercharging pressure, or another controlled variable, physical quantity, or index value corresponding to the actual supercharging pressure in a one-to-one, one-to-many, many-to-one, or many-to-many manner. The time transition of the actual supercharging pressure defined in association with the past actual supercharging pressure plays an important role in the present invention.

In other words, in the apparatus for controlling the internal combustion engine of the present invention, the controller determines the abnormality of at least one of the turbine and the compressor on the basis of the specified time transition of the actual supercharging pressure. Incidentally, the expression "determine the abnormality" includes at least determining the abnormality in a binary manner, and conceptually includes classifying a state in a stepwise manner between a normal state and an abnormal state, classifying an abnormality occurrence point more finely, or the like.

Here, both the intake-side variable vane mechanism and the exhaust-side variable vane mechanism are similar in the point of influencing the actual supercharging pressure upon vane fixing. Thus, even with reference only to the actual supercharging pressure at one time point on the time series, it is actually not possible to determine which variable vane mechanism has the vane fixing.

On the other hand, the time transition of the actual supercharging pressure is a characteristic of the actual supercharging pressure quantitatively defined in a regular or irregular time range from the past to the present, and the intake-side variable vane mechanism and the exhaust-side variable vane mechanism have different changes upon vane fixing. For example, if the vane fixing occurs in the exhaust-side variable vane mechanism, the actual supercharging pressure follows the target supercharging pressure to some extent, and then converges to a convergence value which is less than the target supercharging pressure. If the vane fixing occurs in the intake-side variable vane mechanism, the actual supercharging pressure follows the target supercharging pressure to some extent, and then suddenly decreases because choking (passage blockage) occurs in the compressor.

Therefore, according to the apparatus for controlling the internal combustion engine of the present invention, it is possible not only to detect whether or not the vane fixing occurs in the intake-side variable vane mechanism and the exhaust-side variable vane mechanism on the basis of the time transition of the actual supercharging pressure, but also, if the vane fixing occurs, to accurately distinguish whether the vane fixing occurs in the intake-side variable vane mechanism or in the exhaust-side variable vane mechanism.

Moreover, in actually controlling the supercharger after the abnormality detection, or in performing evacuation or limp-home driving of the vehicle, it is possible to take an accurate measure according to a determination result of the controller.

Moreover, at this time, the detecting device, which gives a detection result of the actual supercharging pressure required for the abnormal determination, does not specialize in the abnormality determination. Therefore, according to the present invention, it is possible to perform excellent abnormality determination without increased costs and deteriorated vehicle mountability, by efficiently using a conventional apparatus configuration without new equipment investment.

Incidentally, the controller determines the abnormality of at least one of the turbine (to which the exhaust-side variable vane mechanism belongs) and the compressor (to which the intake-side variable vane mechanism belongs); namely, the controller may determine the abnormality of either one (preferably, both). Considering that the definite distinction is made as described above, even if the abnormality of only one of the turbine and the compressor is determined, reliability regarding the determined abnormality (e.g. presence or absence of the abnormality) is definitely ensured.

Incidentally, the abnormality determined by the controller includes, but is not limited only to, the vane fixing in each vane mechanism as a preferred form, specifically, close-side fixing of the vanes (i.e. which is fixing on a close side than a target opening degree, and which is not necessarily limited to fixing in a fully-closed state). For example, the abnormality in effect includes various abnormalities which can occur in the supercharger, such as damage of a turbine blade, damage of a compressor impeller, abrasion and seizing of a bearing portion of a shaft, or gas leakage in the intake passage.

In summary, the present invention (1) focuses on that the change aspect of the actual supercharging pressure in the finite time range from the past to the present varies between upon vane fixing of the intake-side variable vane mechanism and upon vane fixing of the exhaust-side variable vane mechanism in the supercharger provided with both the exhaust-side variable vane mechanism and the intake-side variable vane mechanism, and (2) allows the accurate abnormality detection in each vane mechanism without increased costs and deteriorated vehicle mountability, using the technical idea of determining the abnormality on the basis of the time transition of the actual supercharging pressure, which is a quantitative index of the change aspect (which, incidentally, is not necessarily a defined value even though it is referred to as the index). Therefore, the present invention is clearly advantageous over any technical idea of realizing the abnormality determination on the basis of only the relation between the actual supercharging pressure and the target supercharging pressure at a particular time point, and over a configuration of separately adding a sensor for detecting a vane opening degree for the purpose of the abnormality determination.

In one aspect of the apparatus for controlling the internal combustion engine of the present invention, said controller specifies, as the time transition, an amount of reduction of the detected actual supercharging pressure with respect to a peak value of the detected actual supercharging pressure, and said controller determines that the compressor is abnormal if the specified amount of reduction is greater than or equal to a predetermined value.

According to this aspect, the amount of reduction with respect to the peak value of the actual supercharging pressure in the aforementioned period is specified as the time transition. As described above, if the vane fixing occurs in the intake-side variable vane mechanism, the actual supercharging pressure suddenly decreases because the choking starts in the compressor at a time point at which the fixing occurs, or a proper time after the time point. In other words, the amount of reduction from the peak value increases in accordance with the elapsed time from the vane fixing occurrence time in a one-to-one, one-to-many, many-to-one, or many-to-one manner. Therefore, on the basis of the amount of reduction, it is possible to accurately determine that the compressor including the intake-side variable vane mechanism is abnormal.

Moreover, at this time, by taking a measure such as, for example, setting the predetermined value which is used for the comparison with the amount of reduction such that the vane fixing can be detected as quickly as possible while eliminating erroneous detection of the vane fixing on an experimental, experiential, theoretical, or simulation basis, or the like in advance, it is possible to perform the abnormality determination before the choking proceeds severely, and it is possible to preferably obtain a time to take an accurate measure corresponding to the determined abnormality of the compressor, such as, for example, a measure of reducing a turbine rotational speed or reducing an intake air amount.

Incidentally, in this aspect, said controller may start the abnormal determination of the compressor if the detected actual supercharging pressure has a declining tendency in the period, and said apparatus for controlling the internal combustion engine may be further configured to prohibit an opening degree change of the exhaust-side variable vane mechanism in a determination period in which said controller performs the abnormality determination of the compressor.

In the case where the abnormality of the compressor is determined on the basis of the amount of reduction with respect to the peak value of the actual supercharging, from the viewpoint of detecting the abnormality of the compressor as quickly as possible, it is desirable to start the abnormality determination on the basis of that the detected actual supercharging pressure has the declining tendency (which does not particularly limit a determination aspect of whether or not the detected actual supercharging pressure has the declining tendency).

On the other hand, if the compressor is actually abnormal, there is no restriction, in terms of practical operation of the supercharger, regarding the determination period which is from the start of the abnormality determination of the compressor to a time point of making the determination that the compressor is actually abnormal, although the compressor is abnormal.

However, in a situation in which there is some abnormality on the compressor side, for example, if the operation of the exhaust-side variable vane mechanism is not limited, the supercharger likely falls into an over-speed state. The over-speed state can promote the seizing and abrasion or the like of the supercharger and reduce a lifetime thereof, and can influence power characteristics of the vehicle equipped with the internal combustion engine.

The controller prohibits the opening degree change operation of the exhaust-side variable vane mechanism from a preventive viewpoint in the determination period corresponding to a type of gray zone (a period in which a possibility that the compressor is abnormal is high enough not to be ignored) (incidentally, which can include an aspect of significantly limiting the operation in a range in which safety is ensured from a viewpoint of stopping the progress of the abnormality of the supercharger).

According to the controller, the opening degree change operation of the exhaust-side variable vane mechanism is prohibited in the determination period. Thus, it is possible to prevent an unnecessary load from being applied to the compressor even if the compressor is actually abnormal, thereby preferably protecting the supercharger.

In another aspect of the apparatus for controlling the internal combustion engine of the present invention, said controller specifies, as the time transition, a change amount of the actual supercharging pressure in a predetermined period, and said controller determines that the turbine is abnormal if the detected actual supercharging pressure is less than the target supercharging pressure and if the specified change amount is less than a predetermined value.

According to this aspect, the change amount of the actual supercharging pressure in the predetermined period is specified as the time transition. Here, if the vane fixing occurs in the exhaust-side variable vane mechanism in the aforementioned period, as described above, the actual supercharging pressure becomes constant or substantially constant. Therefore, except for a case where the actual supercharging pressure follows the target supercharging pressure in good agreement therewith, it is possible to determine that the turbine is abnormal, on the basis of that the actual supercharging pressure is constant or substantially constant in the aforementioned period.

Here, the "predetermined period" is a period required to determine that the turbine is abnormal. A length of the predetermined period may be defined on an experimental, experiential, theoretical, or simulation basis, or the like in advance, as a time in which the specified change amount can be considered to change to the predetermined value or more, or the like, if the exhaust-side variable vane mechanism normally operates.

On the other hand, the "predetermined value" used for the comparison with the specified change amount is a value which allows the determination that the actual supercharging pressure is constant or substantially constant, and can be set in view of a relation with the predetermined period on an experimental, experiential, theoretical, or simulation basis, or the like in advance.

Incidentally, the "predetermined period" associated with the specification of the change amount and the "predetermined value" to be used for the comparison with the change amount have a type of correlation. In other words, if the predetermined period is relatively long (or short), the predetermined value of the change amount can be relatively large (or small) accordingly. Using such a relation, it is possible to ensure determination accuracy associated with the abnormality determination, even if there is time restriction in the abnormal determination.

In another aspect of the apparatus for controlling the internal combustion engine of the present invention, said controller specifies, as the time transition, a deviation of the detected actual supercharging pressure with respect to the target supercharging pressure, and said controller further determines an abnormality occurrence point in the compressor on the basis of the air flow quantity and the specified deviation if it is determined that the compressor is abnormal.

The reduction in the actual supercharging pressure in the aforementioned period can occur due to not only the vane fixing of the intake-side variable vane mechanism but also other abnormalities which can occur in the supercharger (excluding the vane fixing of the exhaust-side variable vane mechanism, as described above), such as, for example, damage of a turbine blade, damage of a compressor impeller, abrasion and seizing of a bearing portion of a shaft, or gas leakage in the intake passage.

Here, between the vane fixing of the intake-air variable vane mechanism and the other abnormalities, there is a difference in the air flow quantity before and after the compressor. In other words, if there is intake leakage on a compressor downstream, a difference increases between the air flow quantity on a compressor upstream and the air flow quantity on the compressor downstream (i.e. near an intake manifold); however, the vane fixing of the intake-air variable vane mechanism does not cause such an increase. Moreover, if a compressor impeller, a turbine blade, a bearing, or the like is abnormal, the compressor does not normally operate, and thus, the air flow quantity of the compressor instantaneously decreases on the compressor upstream and downstream; however, the vane fixing of the intake-air variable vane mechanism does not cause such an instantaneous reduction in the air flow quantity.

Therefore, in determining that the compressor is abnormal, it is possible to further accurately classify the abnormality occurrence point with reference to the air flow quantity of the compressor in addition to the deviation as the time transition (which is the deviation between the target supercharging pressure and the actual supercharging pressure, and which includes the amount of reduction with respect to the peak value in the aforementioned aspect in a broad sense). At this time, the air flow quantity of the compressor can use sensor values of various sensors which can be normally provided for the internal combustion engine, such as an air flow meter. Preferably, in classifying this type of abnormality point, the addition of a new constituent does not increase cost.

In one aspect of the apparatus for controlling the internal combustion engine of the present invention capable of determining the abnormality occurrence point in the compressor, said controller determines at least presence or absence of close-side fixing of the intake-side variable vane mechanism.

According to this aspect, as a result of the determination of the abnormality occurrence point, at least the presence or absence of the close-side fixing of the vanes in the intake-side variable vane mechanism is determined. It is thus possible to detect the close-side fixing of the intake-side variable vane mechanism, more accurately, and it is possible to prevent, suppress, or mitigate the choking which influences not only the compressor but also the entire supercharger.

Incidentally, in this aspect, said apparatus for controlling the internal combustion engine may be further configured to specify an opening degree of the intake-side variable vane on the basis of a front-to-back pressure ratio of the compressor and the air flow quantity if it is judged that there is the close-side fixing in the intake-side variable vane mechanism and correct at least one of the actual supercharging pressure and the air flow quantity in accordance with the specified opening degree.

In this case, if the close-side fixing of the intake-side variable vane mechanism is detected, the vane opening degree at that time point is specified by the controller. Here, as the front-to-back pressure ratio of the compressor and the air flow quantity that the controller refers to when specifying the vane opening degree, it is possible to refer to the sensor values of various sensors which can be normally provided for the internal combustion engine (for example, an air flow meter and an intake pressure sensor disposed on the compressor upstream side (incidentally, intake pressure on the compressor upstream side is typically atmospheric pressure)). In other words, even in this aspect, it is not necessary to additionally provide a special sensor for the internal combustion engine for the purpose of the abnormality determination of the supercharger.

On the other hand, if the vane opening degree is specified, at least one of the actual supercharging pressure and the air flow quantity is corrected by the controller in accordance with the specified opening degree. Preferably, operating conditions of the internal combustion engine are limited in an operating area in which the specified vane opening degree does not cause the choking. Therefore, by effectively using an effect of the controller which can accurately perform the abnormality determination of the supercharger, the supercharger can be allowed to operate as highly efficiently as possible in an allowed range at that time point. As a result, it is also possible to perform preferable evacuation or limp-home driving (fail-safe driving) of the vehicle.

Incidentally, the correction of the actual supercharging pressure may be performed, for example, by vane opening degree adjustment of the exhaust-side variable vane mechanism which is normal, exhaust bypassing by a west gate valve, or the like. Moreover, the correction of the air flow quantity may be performed by opening degree adjustment of a throttle valve, intake bypassing by an intake bypass valve, or the like. At this time, the actual supercharging pressure and the air flow quantity may correct in cooperation with each other.

The operation and other advantages of the present invention will become more apparent from the embodiments explained below.

### Brief Description of Drawings

[FIG. 1] FIG. 1 is a schematic configuration diagram conceptually illustrating a configuration of an engine system in a first embodiment of the present invention.
[FIG. 2] FIGs. 2 are schematic configuration diagrams conceptually illustrating a configuration of an intake-side vane in the engine system illustrated in FIG. 1.
[FIG. 3] FIG. 3 is a diagram conceptually illustrating a relation between an air flow quantity Qc and a pressure ratio Rp.
[FIG. 4] FIG. 4 is a flowchart illustrating abnormality determination control performed by an ECU in the engine system illustrated in FIG. 1.
[FIG. 5] FIG. 5 is a diagram exemplifying one time transition of supercharging pressure P3 in an implementation period of the abnormality determination control illustrated in FIG. 4.
[FIG. 6] FIG. 6 is a diagram exemplifying one time transition of a supercharging pressure change rate P3' in the implementation period of the abnormality determination control illustrated in FIG. 4.
[FIG. 7] FIG. 7 is a diagram exemplifying another time transition of the supercharging pressure change rate P3' in the implementation period of the abnormality determination control illustrated in FIG. 4.
[FIG. 8] FIG. 8 is a flowchart illustrating abnormality determination control in a second embodiment of the present invention.
[FIG. 9] FIG. 9 is a flowchart illustrating fail-safe control in a third embodiment of the present invention.
[FIG. 10] FIG. 10 is a schematic diagram illustrating a restriction map referred to in the control illustrated in FIG. 9.
[FIG. 11] FIG. 11 is another schematic diagram illustrating the restriction map referred to in the control illustrated in FIG. 9.
[FIG. 12] FIG. 12 is another schematic diagram illustrating the restriction map referred to in the control illustrated in FIG. 9.
[FIG. 13] FIG. 13 is a flowchart illustrating abnormality determination control in a fourth embodiment of the present invention.

### Mode for Carrying Out the Invention

### <Embodiments of the Invention>

Hereinafter, various preferred embodiments of the present invention will be explained with reference to the drawings.

### <First Embodiment>

### <Configuration of Embodiment>

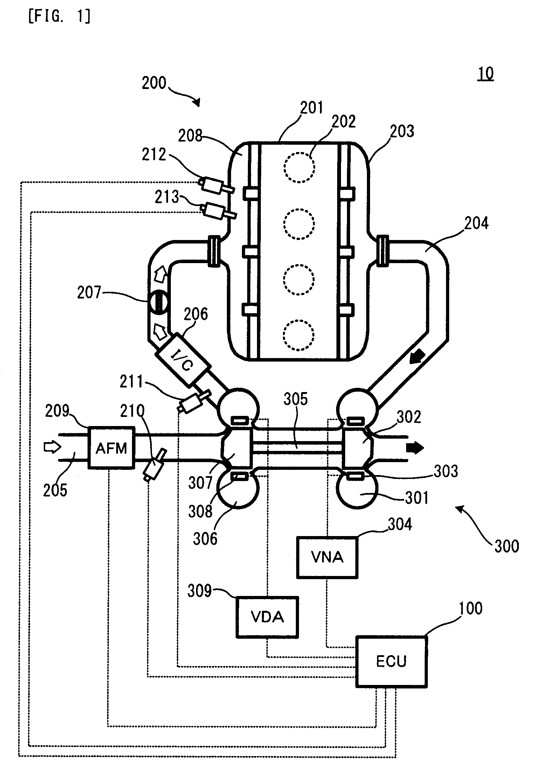

Firstly, with reference to FIG. 1, a configuration of an engine system 10 in a first embodiment of the present invention will be explained. FIG. 1 is a schematic configuration diagram conceptually illustrating the configuration of the engine system 10.

In FIG. 1, the engine system 10 is mounted on a not-illustrated vehicle, and is provided with an ECU 100 and an engine 200.

The ECU 100 is provided with a central processing unit (CPU), a read only memory (ROM), and a random access memory (RAM) or the like. The ECU 100 is an electronic control unit capable of controlling the entire operation of the engine 200. The ECU 100 is one example of the "apparatus for controlling the internal combustion engine" of the present invention. The ECU 100 is configured to perform abnormality determination control described later, in accordance with a control program stored in the ROM.

Incidentally, the ECU 100 is an integral or unified electronic control unit configured to function as one example of the "controller" of the present invention, and all the operations of the controller is performed by the ECU 100. However, the physical, mechanical, and electrical configurations of the controller of the present invention are not limited to this example, and for example, the controller may be configured as various computer systems or the like, such as a plurality of ECUs, various processing units, various controllers, or microcomputer apparatuses.

The engine 200 is an in-line four-cylinder diesel engine as one example of the "internal combustion engine" of the present invention, which runs on light oil. An outline of the engine 200 will be explained. The engine 200 has a configuration in which four cylinders 202 are arranged in a line in a cylinder block 201. Air is drawn or sucked into each cylinder in an intake stroke, and fuel is injected into the cylinder. The sprayed fuel and the intake air are stirred and mixed to make an air-fuel mixture in a compression stroke. The air-fuel mixture is spontaneously ignited and burned near a compression end.

Combustion energy associated with the combustion is converted into kinetic energy by driving a crankshaft (not illustrated) via a piston and a connecting rod which are not illustrated. The rotation of the crankshaft is transmitted to drive wheels of a vehicle equipped with the engine system 10, which enables the vehicle to travel.

Exhaust emitted from each cylinder in an exhaust stroke is collected in an exhaust manifold 203 and is guided to an exhaust tube 204 connected to the exhaust manifold 203. Here, the engine 200 is provided with a turbocharger 300, and the exhaust guided to the exhaust tube 204 is guided to a catalyst apparatus on a downstream side (not illustrated) after exhaust heat energy is supplied to a turbine blade 302 of the turbocharger 300. Incidentally, the details of the turbocharger 300 will be described later.

On the other hand, air is drawn from the exterior via a not-illustrated air cleaner to an intake tube 205. The intake air is compressed by the rotation of a compressor impeller 307 which constitutes the turbocharger 300, and is supplied to an intercooler 206 disposed on the downstream side of the compressor impeller 307. The intercooler 206 is a cooling apparatus for cooling the intake air after the compression and improving supercharging efficiency.

On the downstream side of the intercooler 206 of the intake tube 205, a throttle valve 207 is disposed. The throttle valve 207 is a valve for adjusting an amount of the intake value in accordance with an opening / closing state, and the opening / closing state is controlled by an actuator electrically connected to the ECU 100. In other words, the throttle valve 207 establishes one portion of a so-called electronically controlled throttle apparatus.

The intake tube 205 is coupled with an intake manifold 208 on the downstream side of the throttle vale 207. The intake manifold 208 is connected to an intake port corresponding to each cylinder formed in the cylinder block 201. The intake air guided to the intake manifold 208 is mixed with gasoline, which is sprayed in the intake port, and is drawn into the cylinder at the time of opening a not-illustrated intake valve in each cylinder.

Incidentally, the diesel engine is exemplified in the embodiment; however, this is merely one example of the internal combustion engine of the present invention. The internal combustion engine of the present invention may be, for example, a gasoline engine, or an engine using an alcohol fuel mixture.

The engine 200 is provided with the turbocharger 300, as one example of the "supercharger" of the present invention, which collects exhaust heat to rotationally drive the turbine blade and which uses the compressor impeller rotating integrally with the turbine blade, thereby compressing the intake air to be atmospheric pressure or more, and supplying it to the downstream side (i.e. supercharging).

The turbocharger 300 is provided with a variable nozzle turbine (VNT) including a turbine housing 301, a turbine blade 302, nozzle vanes 303, and a variable nozzle actuator 304 (hereinafter a generic term of "VNT" will be used, as occasion demands).

The turbine housing 301 is a housing or case for accommodating therein the turbine blade 302 and the nozzle vanes 303.

The turbine blade 302 is a metallic or ceramic rotary wing configured to rotate around a turbo rotating shaft 305 due to pressure of the exhaust (i.e. exhaust pressure) guided to the exhaust tube 204.

The nozzle vanes 303 are a plurality of vane members equally spaced to surround the turbine blade 302 and disposed in an inlet part corresponding to an entrance of the exhaust with respect to the turbine blade 302 in the turbine housing 301. Each of the nozzle vanes 303 can simultaneously pivot in the inlet part around a predetermined rotating shaft by means of a not-illustrated link-type pivoting mechanism. The nozzle vanes 303 can change a communication area between the exhaust tube 204 and the turbine blade 302 in accordance with an opening / closing state thereof. More specifically, the communication area is minimal in a state in which an opening degree of the nozzle vanes 303 is 0 degrees (fully closed), and the communication area is maximal in a state in which the opening degree is 90 degrees (fully opened).

Here, if the communication area becomes small, a flow velocity of the exhaust becomes high. Thus, in a light-load region in which an engine displacement is relatively small, the turbine 302 can be efficiently driven by controlling the nozzle vanes 303 to a close side.

The link pivoting mechanism for pivoting the nozzle vanes 303 is driven by a driving force supplied from the variable nozzle actuator (VNA) 304. The variable nozzle actuator 304 is electrically connected to the ECU 100, and the opening / closing state of the nozzle vanes 303 is controlled by the ECU 100 in accordance with operating conditions of the engine 200. Incidentally, an aspect of controlling the nozzle vanes 303 may be known, and details thereof are omitted herein. Qualitatively, in the light-load region, the nozzle vanes 303 are controlled to the close side as described above. In a high-load region, the nozzle vanes 303 are controlled to the open side to avoid an increase in engine back pressure because an action of adjusting the velocity of the exhaust by the nozzle vanes 303 is not required.

Incidentally, a variable nozzle mechanism including the nozzle vanes 303 and the variable nozzle actuator 304 is one example of the "exhaust-side variable vane mechanism" of the present invention.

The turbocharger 300 is provided with a variable geometry compressor (VGC) including a compressor housing 306, the compressor impeller 307, diffuser vanes 308, and a variable diffuser actuator 309 (hereinafter a generic term of "VGC" will be used, as occasion demands).

The compressor housing 306 is a housing or case for accommodating therein the compressor impeller 307 and the diffuser vanes 308.

The compressor impeller 307 is configured to perform pressurized supply of the air which is drawn to the intake tube 205 from the exterior via the air cleaner, to the downstream side by pressure caused by rotation associated with the rotation of the turbine blade 302. Due to the effect of the pressurized supply of the intake air by the compressor impeller 307, so-called supercharging is realized.

The diffuser vanes 308 are a plurality of vane members equally spaced to surround the compressor impeller 307 and disposed in a diffuser part, which adjusts a flow velocity of the intake air supplied via the compressor impeller 307 in the compressor housing 306 to take out pressure energy. Each of the diffuser vanes 308 can simultaneously pivot in the diffuser part around a predetermined rotating shaft by means of a not-illustrated link pivoting mechanism. The diffuser vanes 308 can change a communication area between the intercooler 206 side and the compressor impeller 307 side of the intake tube 205 in accordance with an opening / closing state thereof. More specifically, the communication area is minimal in a state in which an opening degree of the diffuser vanes 308 is 0 degrees (fully closed), and the communication area is maximal in a state in which the opening degree is 90 degrees (fully opened).

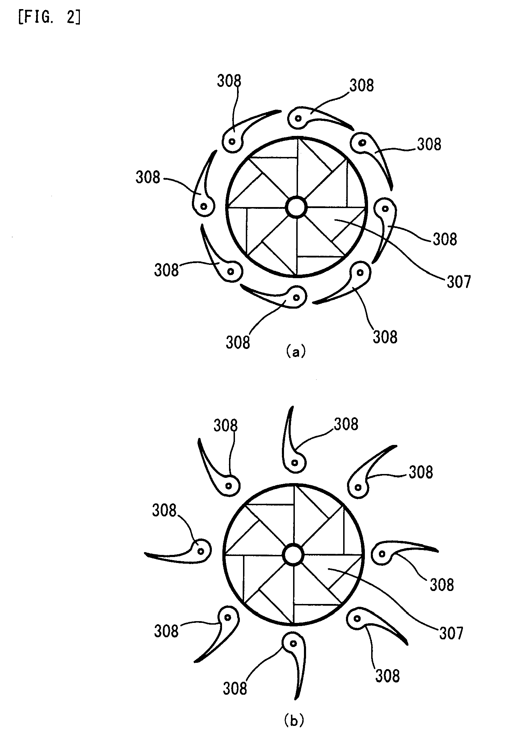

Now, with reference to FIGs. 2, a configuration of the diffuser vanes 308 will be explained. FIGs. 2 are schematic plan views illustrating the compressor impeller 307 viewed from the diffuser part. Incidentally, in FIGs. 2, portions overlapping those of FIG. 1 will carry the same reference numerals, and an explanation thereof is omitted as occasion demands.

In FIGs. 2, FIG. 2(a) corresponds to the case where the diffuser vanes 308 are fully closed (with an opening degree of 0 degrees), and FIG. 2(b) corresponds to the case where the diffuser vanes 308 are fully opened (with an opening degree of 90 degrees). As illustrated, if the diffuser vanes 308 are in the fully-closed state, a passage of the intake air which has passed the compressor impeller 307 is most narrowed. In contrast, if the diffuser vanes 308 are in the fully-opened state, the passage is rarely narrowed.

If the communication area of the passage becomes small, the flow velocity of the intake air increases. Thus, in the light-load region in which a supercharging effect is relatively small, the supercharging efficiency can be improved by controlling the diffuser vanes 308 to the close side. On the other hand, if the supercharging is performed with a maintained constant vane opening degree of the diffuser vanes 308, an air flow quantity reaches a choke flow quantity which may cause choking, and the choking likely occurs. Thus, the diffuser vanes 308 are controlled to be driven to the open side, i.e. to a side where a vane opening degree increases, in a stepwise or continuous manner, in accordance with a transition from light-load operation to a high-load operation (generally equivalent to an increase in supercharging pressure).

Incidentally, a configuration of the nozzle vanes 303 described above is conceptually the same as that of the diffuser vanes 308 illustrated in FIG. 2.

Back in FIG. 1, the link pivoting mechanism for pivoting the diffuser vanes 308 is driven by a driving force supplied from the variable diffuser actuator (VDA) 309. The variable diffuser actuator 309 is electrically connected to the ECU 100, and the opening / closing state of the diffuser vanes 308 is controlled by the ECU 100 in accordance with operating conditions of the engine 200. Incidentally, an aspect of controlling the diffuser vanes 308 may be known, and details thereof are omitted herein. Qualitatively, in the light-load region, the diffuser vanes 308 are controlled to the close side as described above. In the high-load region, the diffuser vanes 308 are controlled to the open side to prevent a reduction in supercharging pressure caused by the choking (passage blockage).

Incidentally, a variable diffuser mechanism including the diffuser vanes 308 and the variable diffuser actuator 309 is one example of the "intake-side variable vane mechanism" of the present invention.

On the other hand, the engine system 10 is provided with an air flow meter 209, an intake pressure sensor 210, a supercharging pressure sensor 211, an intake manifold pressure sensor 212, and an intake manifold intake air temperature sensor 213.

The air flow meter 209 is a sensor capable of detecting an air flow quantity Qc, which is an amount of the intake air drawn from the exterior. The air flow meter 209 is electrically connected to the ECU 100, and the detected air flow quantity Qc is referred to by the ECU 100 with a regular or irregular period.

The intake pressure sensor 210 is a sensor, disposed on the downstream side of the air flow meter 209, capable of detecting intake pressure P0 which is pressure of the intake air (which is substantially a value corresponding to atmospheric pressure). The intake pressure sensor 210 is electrically connected to the ECU 100, and the detected intake pressure P0 is referred to by the ECU 100 with a regular or irregular period.

The supercharging pressure sensor 211 is a sensor, disposed between the VGC and the intercooler 206, capable of detecting supercharging pressure P3. The supercharging pressure sensor 211 is electrically connected to the ECU 100, and the detected supercharging pressure P3 is referred to by the ECU 100 with a regular or irregular period.

The intake manifold pressure sensor 212 is a sensor, disposed in the intake manifold 208, capable of detecting intake manifold pressure Pim which is pressure within the intake manifold. The intake manifold pressure sensor 212 is electrically connected to the ECU 100, and the detected intake manifold pressure Pim is referred to by the ECU 100 with a regular or irregular period.

The intake manifold intake air temperature sensor 213 is a sensor, disposed in the intake manifold 208, capable of detecting an intake manifold intake air temperature Tim which is a temperature of the intake air in the intake manifold. The intake manifold intake air temperature sensor 213 is electrically connected to the ECU 100, and the detected intake manifold intake air temperature Tim is referred to by the ECU 100 with a regular or irregular period.

### <Operation of Embodiment>

Next, operation of the embodiment will be explained.

### <Drive Control of Turbocharger 300>

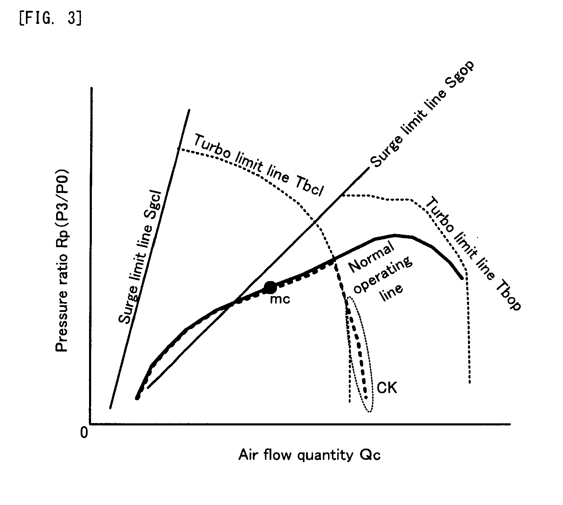

Firstly, with reference to FIG. 3, operating characteristics of the turbocharger 300 will be explained. FIG. 3 is a diagram conceptually illustrating a relation between the air flow quantity Qc and a pressure ratio Rp (Rp=P3/P0).

In FIG. 3, a horizontal axis represents the air flow quantity Qc, and a vertical axis represents the pressure ratio Rp.

FIG. 3 illustrates surge limit lines Sg (thin solid line) and turbo limit lines Tb corresponding to two types of diffuser vane opening degrees Adfs for convenience. The surge limit line Sg and the turbo limit line Tb corresponding to a relatively small or close-side diffuser vane opening degree Adfscl are a surge limit line Sgcl illustrated and a turbo limit line Tbcl illustrated, respectively. The surge limit line Sg and the turbo limit line Tb corresponding to a relatively large or open-side diffuser vane opening degree Adfsop are a surge limit line Sgop illustrated and a turbo limit line Tbop illustrated, respectively.

Incidentally, the diffuser vanes 308 are configured such that the diffuser vane opening degree Adfs can continuously change, and originally, many surge limit lines Sg and turbo limit lines Tb corresponding to many diffuser vane opening degrees Adfs can be defined on a coordinate space of FIG. 3. The illustration of all of the limit lines, however, complicates the drawing, and thus, in the embodiment, the explanation is continued under the assumption that the diffuser vanes 308 are changed in a binary manner between the close-side diffuser vane opening degree Adfscl and the open-side diffuser vane opening degree Adfop.

The surge limit line Sg is a line for defining a surge limit of the VGC (variable geometry compressor) which constitutes the turbocharger 300, and means that a region on a smaller air volume side (a left side in the drawing) or on a higher pressure ratio side (an upper side in the drawing) than the surge limit line Sg is a surge region. In the surge region, surging occurs in the compressor impeller 307 as a resonance phenomenon, and the supercharging efficiency extremely decreases.

The turbo limit line Tb is a line for defining a limit of a turbine rotational speed of the VNT (variable nozzle turbine) which constitutes the turbocharger 300, and means that the turbocharger 300 does not operate in a region on a larger air volume side (a right side in the drawing) or on the higher pressure ratio side (the upper side in the drawing) than the turbo limit line Tb. In other words, if the air flow quantity Qc gradually increases and reaches the turbo limit lint Tb in the course of the supercharging, the pressure ratio Rp suddenly decreases. This is because the passage blockage, i.e. so-called choking, occurs due to the diffuser vanes 308 and the supercharging pressure suddenly decreases, even if it is tried to increase the air flow quantity Qc over the turbo limit line Tb.

Therefore, if a particular diffuser vane opening degree is given, an actual operating area of the turbocharger 300 is limited to a region between the surge limit line Sg and the turbo limit line Tb.

On the other hand, in the embodiment, target supercharging pressure Ptg of the turbocharger 300 is set on the basis of a required load of the engine 200 (or a target intake air amount) which can be determined in accordance with an engine rotational speed Ne and an accelerator opening degree Ta or the like. Therefore, if there is an acceleration request in the vehicle by a driver further pressing an accelerator pedal or the like, the target supercharging pressure Ptg tends to increase.

On the other hand, the supercharging pressure P3, which is actual supercharging pressure of the turbocharger 300, is controlled to follow the target supercharging pressure Ptg. At this time, for example, a nozzle vane opening degree Anzl of the VNT is controlled to be driven to a valve opening side. Alternatively, if an exhaust bypass valve and an intake bypass valve are separately provided, the bypass valves are controlled to a valve closing side.

Here, if the diffuser vane opening degree Adfs remains fixed, as described above, the choking occurs in the high-load region (i.e. a region in which the air flow quantity Qc is high). Thus, mainly in an acceleration request period in which a difference from the target supercharging pressure Ptg increases, the diffuser vanes 308 are also controlled to be driven to the valve opening side in accurate timing.

FIG. 3 illustrates a change operating point mc (refer to a black circle). In the embodiment, the change operating point mc is set in the vicinity of a point of crossing, to a high-load side, the surge limit line Sg (i.e. Sgop in this case) corresponding to the diffuser vane opening degree after the transition (i.e. Adfsop on the open side in this case). This is because a high-efficiency region having high turbo efficiency (high supercharging pressure with respect to work given to the turbocharger 300 approaches the surge limit line as the diffuser vane opening degree becomes small, and because efficient supercharging can be realized by selecting the open-side diffuser vane opening degree when the open-side diffuser vane opening degree can be selected.

If the diffuser vane opening degree Adfs is changed at the change operating point mc, the operating area of the turbocharger 300 changes to a relatively high-load region defined by the surge limit line Sgop and the turbo limit line Tbop. It is thus possible to control the supercharging pressure P3 to well follow the increase in the target supercharging pressure Ptg. As a result, if the turbocharger 300 is normal, the turbocharger 300 operates in accordance with a normal operating line illustrated by a thick solid line in the drawing.

Incidentally, even if the diffuser vane opening degree Adfs is continuously changed, the diffuser vane opening degree Adfs is sequentially selected at a change operating point corresponding to an opening degree which is on the open side of a current time point, basically as illustrated in FIG. 3, and the efficient operation of the turbocharger 300 is ensured.

Now, it is considered that close-side vane fixing (i.e. vane fixing on the close side of a required opening degree) occurs in the diffuser vanes 308. Referring to FIG. 3 again, in this case, the diffuser vane opening degree Adfs is still Adfscl at the change operating point mc, and the operating line of the turbocharger 300 is as illustrated by a thick dashed line in the drawing. In other words, from a time point at which the operating point of the turbocharger 300 reaches the turbo limit line Tbcl with increasing the air flow quantity Qc, the pressure ratio Rp suddenly starts to decrease due to the choking. As a result, the operating point likely enters a choking region surrounded by a dashed frame CK illustrated.

By the way, considering only the reduction in supercharging pressure P3, actually, the reduction in supercharging pressure P3 can occur even when the nozzle vanes 303 of the VNT are fixed on the open side. Therefore, simply with reference only to the supercharging pressure P3 at that time point, it is hardly possible to distinguish between the open-side fixing of the nozzle vanes 303 and the close-side fixing of the diffuser vanes 308. If it is not possible to distinguish between them, there is nothing but to adjust a practical operation form of the turbocharger 300 to a safe side, and it is thus difficult to optimize the operation of the turbocharger 300.

Thus, in the embodiment, the ECU 100 performs the abnormality determination control, thereby accurately distinguishing between the open-side vane fixing on the VNT side and the close-side vane fixing on the VGC side in the turbocharger 300.

### <Details of Abnormality Determination Control>

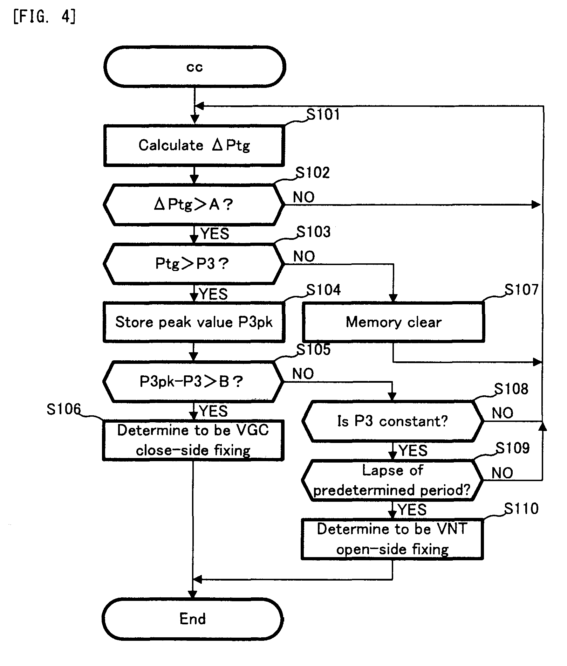

Next, with reference to FIG. 4, the details of the abnormal determination control performed by the ECU 100 will be explained. FIG. 4 is a flowchart illustrating the abnormality determination control.

In FIG. 4, the ECU 100 calculates a change amount ΔPtg of the target supercharging pressure of the turbocharger 300 (step S101). Incidentally, the change amount ΔPtg is calculated with a predetermined period, and the change amount ΔPtg in the step S101 is equivalent to a change speed of the target supercharging pressure. The calculated change amount ΔPtg is one example of the "change speed of the target supercharging pressure" of the present invention.

Incidentally, the ECU 100 obtains sensor values with a predetermined period from the various sensors provided for the engine system 10. Therefore, the ECU 100 always recognizes the air flow quantity Qc, the intake pressure P0, the supercharging pressure P3, the intake manifold intake pressure Pim, and the intake manifold intake air temperature Tim.

The ECU 100 determines whether the calculated change amount ΔPtg is greater than a predetermined value A (step S102). Here, the predetermined value A is a value for defining whether or not the vehicle is in an accelerated state to the degree that abnormal determination can be sufficiently performed, and is a fixed value stored in the ROM in advance. As described later, the abnormality determination control in the embodiment is performed on the basis of a time transition of the actual supercharging pressure, and thus, determination accuracy associated with the abnormality determination is hardly ensured if the target supercharging pressure Ptg is originally unchanged or is constant to the similar extent thereto. Conversely, the abnormality determination control can be performed anytime if the vehicle is in a sufficiently accelerated state. The predetermined value A is a value which can be taken routinely sufficiently, and in that sense, an abnormality determination opportunity is sufficiently ensured.

If the change amount ΔPtg is less than or equal to the predetermined value A (the step S102: NO), the processing is returned to the step S101, and a series of processing operations is repeated. On the other hand, if the change amount ΔPtg is greater than the predetermined value A (the step S102: YES), i.e. if an abnormality determination condition is satisfied, the ECU 100 determines whether or not the supercharging P3 is less than the target supercharging pressure Ptg (step S103). If the supercharging P3 is greater than or equal to the target supercharging pressure Ptg (the step S103: NO), the ECU 100 deletes a peak value P3pk described later, from a memory (step S107), returns the processing to the step S101, and repeats a series of processing operations.

Incidentally, hereinafter, a period in which the change amount ΔPtg of the target supercharging pressure is greater than the predetermined value A will be referred to as a "target supercharging pressure increasing period" as occasion demands.

If the supercharging P3 is less than the target supercharging pressure Ptg (the step S102: YES), the ECU 100 obtains the peak value P3pk of the supercharging pressure P3 and stores it in the memory (e.g. RAM) (step S104). Here, the peak value P3pk of the supercharging pressure P3 is a peak value taken by the supercharging pressure P3 in the course of following the target supercharging pressure Ptg in the target supercharging increasing period. If the supercharging pressure P3 keeps increasing in the target supercharging pressure period to follow the target supercharging pressure Ptg, basically, the peak value P3pk is updated to a value of the supercharging pressure P3 at that time point. On the other hand, if the supercharging pressure P3 is less than a previous value, the peak value P3pk is not updated (and the peak value p3pk may as well be updated if the supercharging pressure P3 is equal to the previous value).

The ECU 100 determines whether or not a peak deviation (i.e. P3pk-P3), which is a deviation between the obtained peak value P3pk and the latest supercharging pressure P3, is greater than a predetermined value B (step S105). Incidentally, the predetermined value B will be described later. If the peak deviation is greater than the predetermined value B (the step S105: YES), the ECU 100 determines that the diffuser vanes 308 of the VGC is in the close-side fixing state (step S106).

On the other hand, if the peak deviation is less than or equal to the predetermined value B (the step S105: NO), the ECU 100 determines whether or not the supercharging pressure P3 is constant (step S108). Incidentally, "being constant" means that the deviation between a current value and the previous value of the supercharging pressure P3 is within a reference value range. If the supercharging pressure P3 is not constant (the step S108: NO), the ECU 100 returns the processing to the step S101 and repeats a series of processing operations. Incidentally, a condition in which the step S108 branches to the "NO" side includes a case where the supercharging pressure P3 keeps following the target supercharging pressure Ptg and a case where the peak deviation is still less than the predetermined value B even though the supercharging pressure P3 decreases.

If the supercharging pressure P3 is constant (the step S108: YES), the ECU 100 determines whether or not a period in which the supercharging pressure P3 is constant continues for a predetermined period (step S109). If the period in which the supercharging pressure P3 is constant is less than the predetermined period (the step S109: NO), the ECU 100 returns the processing to the step 5101 and repeats a series of processing operations.

If the supercharging pressure P3 is constant for the predetermined period or longer (the step S109: YES), the ECU 100 determines that the nozzle vanes 303 of the VNT is in the open-side fixing state (step S110). If the step S106 or the step S110 is performed, i.e. if the close-side fixing of the VGC or the open-side fixing of the VNT is detected, the abnormality determination control is ended. Moreover, if the turbocharger 300 is normal and the supercharging pressure P3 follows the target supercharging pressure Ptg without any problem, loop-processing of the abnormality determination control is always performed between corresponding steps.

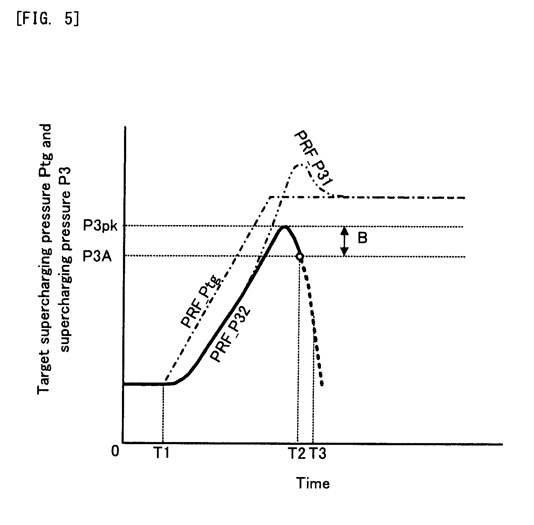

Now, with reference to FIG. 5, an explanation will be given to a determination principle associated with the determination of the close-side fixing of the diffuser vanes 308 and the open-side fixing of the nozzle vanes 303 in the abnormality determination control. FIG. 5 is a diagram exemplifying one time transition of the supercharging pressure P3 in an implementation period of the abnormality determination control.

In FIG. 5, a vertical axis represents the target supercharging pressure Ptg and the supercharging pressure P3 (i.e. a pressure value), and a horizontal axis represents time. It is assumed that at a time point T1, the change amount of the target supercharging pressure Ptg exceeds the predetermined value A and the updating of the peak value P3pk of the supercharging pressure is started.

In a case where the time transition of the target supercharging pressure Ptg is as illustrated PRF_Ptg (refer to an alternate long and short dash line), the time transition of the supercharging P3 is as illustrated PRF_P31 (refer to an alternate long and two short dashes line) if the turbocharger 300 is normal. In other words, the supercharging pressure P3 follows the target supercharging pressure Ptg with a constant time delay, temporarily overshoots, and then converges to the target supercharging pressure Ptg.

If, however, there is the close-side fixing in the diffuser vanes 308 of the VGC, the change of the opening degree of the diffuser vanes 308 at the change operating point is not completed as described above. Thus, after the change operating point, the time transition of the supercharging pressure P3 gradually deviates from a time transition in the normal case, as illustrated in PRF_P32 (refer to a solid line).

Then, when the operating point of the turbocharger 300 (simply, the air flow quantity Qc) reaches a value defined by the turbo limit line Tb, a mild degree of choking starts, and the supercharging pressure P3 suddenly starts to decrease. As a result, at a certain time point, the peak value P3pk of the supercharging pressure P3 is determined.

Here, if the sharp drop of the supercharging pressure P3 is left unsolved, the choking further proceeds as illustrated in a dashed line, and the supercharging pressure P3 extremely decreases. That is why in the abnormality determination control, it is determined that the diffuser vanes 308 are in the close-side fixing state at a time point T2 (a time point corresponding to a white circle illustrated) at which the peak deviation, which is an amount of reduction from the peak value P3pk, reaches the predetermined value B. As described above, the predetermined value B is determined in advance as a value for defining whether or not the supercharging pressure P3 decreases to a value corresponding to a time point on a time series before a time point (e.g. a time point T3 illustrated) at which there is the choking severe enough not to be practically ignored.

On the other hand, the illustration is omitted, but if the nozzle vanes 303 of the VNT are in the open-side fixing state, the actual supercharging pressure P3 stops following the target supercharging pressure Ptg in the same manner. However, in view of not the supercharging pressure at one time point but the time transition in a finite time range, the actual supercharging pressure P3 does not decrease with respect to the close-side fixing of the nozzle vanes 303. In other words, even if the open-side fixing occurs in the nozzle vanes 303, only an exhaust supply to the turbine blade 302 is limited, and the supercharging pressure P3 does not significantly decrease from the already reached supercharging pressure. Therefore, if the time transition is set as a determination criterion, it is possible to accurately distinguish between the open-side fixing of the nozzle vanes 303 and the close-side fixing of the diffuser vanes 308.

As explained above, according to the abnormality determination control in the embodiment, it is possible to determine the abnormality of the turbocharger 300 with accuracy and without any problems, such as increased costs, deteriorated vehicle mountability, and increased control load, by taking into account that the time transition of the supercharging pressure P3 in the target supercharging pressure increasing period completely differs between the close-side fixing of the nozzle vanes 303 and the open-side fixing of the diffuser vanes 308 and by using the detected values of the sensors originally provided for the engine system 10.

Incidentally, in the embodiment, the determination associated with the close-side fixing of the diffuser vanes 308 is performed on the basis of the peak deviation (one example of the "time transition of the actual supercharging pressure" of the present invention), which is the amount of reduction of the supercharging pressure P3 from the peak value P3pk; however, as the determination criterion associated with the determination, not only the peak deviation but also another index can be applied.

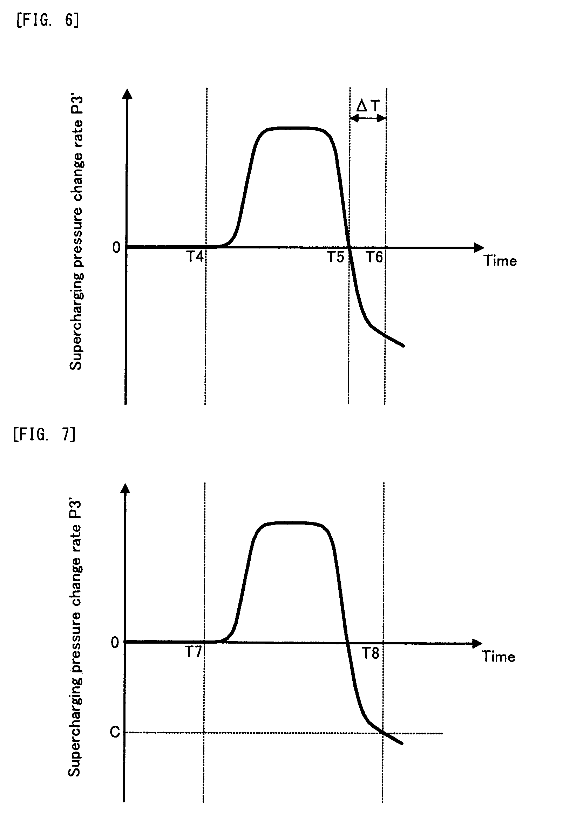

Now, with reference to FIG. 6 and FIG. 7, another determination criterion will be explained. FIG. 6 is a diagram exemplifying one time transition of a supercharging pressure change rate P3' in the target supercharging pressure increasing period. FIG. 7 is a diagram exemplifying another time transition of the supercharging pressure change rate P3' in the target supercharging pressure increasing period. Incidentally, in FIG. 6 and FIG. 7, portions overlapping each other will carry the same reference numerals, and an explanation thereof is omitted as occasion demands.

In FIG. 6, the supercharging pressure change rate P3' is a time change rate of the supercharging pressure P3, and is equal to the change amount if a calculation period is constant. Here, if the supercharging pressure change rate P3' is used as described above, the "time transition of the actual supercharging pressure" of the present invention can be defined as follows.

In other words, it is assumed that the target supercharging pressure Ptg starts to change at a time point T4. A period in which the supercharging pressure change rate P3' takes a positive value is a period in which the supercharging pressure P3 increases, and it is possible to determine that the choking has not occurred yet. On the other hand, at a time point T5 at which the supercharging pressure change rate P3' starts to take a negative value, the supercharging pressure P3 starts to decrease from the peak value P3pk if it is liken to the embodiment described above.

Here, if time measurement is started at the time point T4 and a length of a period (i.e. a time length) in which the supercharging pressure change rate P3' continuously takes the negative value is detected, then, the detected time value can be used as one example of the "time transition of the supercharging pressure" of the present invention. For example, as illustrated, it is possible to determine that the diffuser vanes 308 are in the close-side fixing state by using a time point T6 at which the time value reaches a reference value ΔT (which can be experimentally determined in advance).

On the other hand, FIG. 7 exemplifies a time transition of the supercharging pressure change rate P3' as in FIG. 6, in which the abnormality determination is started at a time point T7. It may be determined that the diffuser vanes 308 are in the close-side fixing state by using a time point T8 at which the supercharging pressure change rate P3' reaches a reference value C. At this time, monitoring of the supercharging pressure change rate P3' is continued after the time point T7. It is obvious that reaching the reference value C at the time point T8 is not temporal. In other words, such a determination aspect is also one example of the determination using the "time transition of the actual supercharging pressure" of the present invention, which correlates with behavior of the past supercharging pressure.

### <Second Embodiment>

In the first embodiment described above, the determination associated with the close-side fixing of the diffuser vanes 308 is performed on the basis of the amount of reduction (the peak deviation) wen the supercharging pressure P3 decreases from the peak value P3pk. This type of reduction from the peak value of the supercharging pressure, however, can occur for reasons other than the close-side fixing of the diffuser vanes 308. In other words, although it is possible to distinguish a cause between the nozzle vanes 303 and the diffuser vanes 308 as described above, there is room for improvement in the abnormality determination control in the first embodiment, from the viewpoint of performing finer abnormality determination.

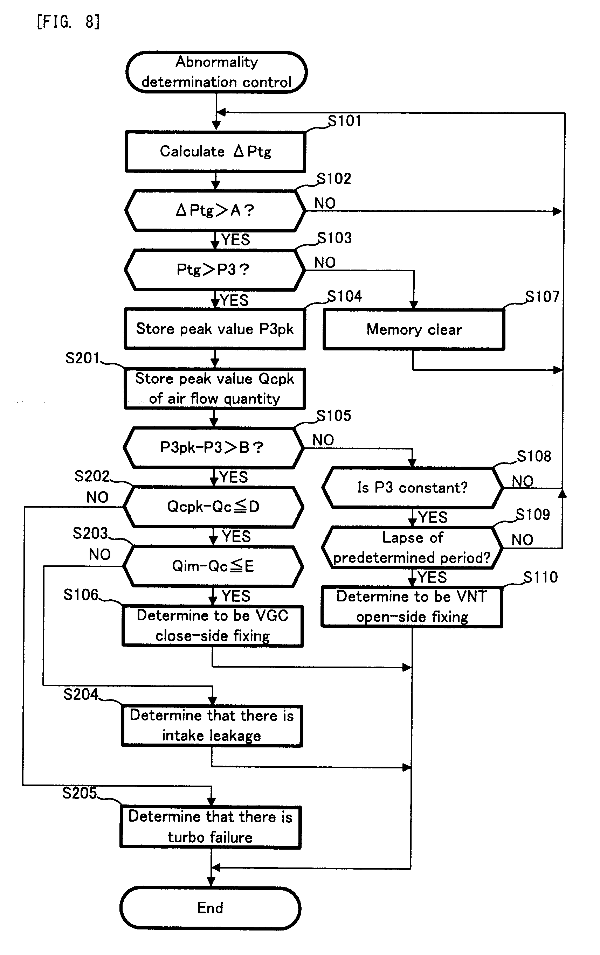

Now, with reference to FIG. 8, abnormality determination control in a second embodiment of the present invention will be explained. FIG. 8 is a flowchart illustrating the abnormality determination control. Incidentally, in FIG. 8, portions overlapping those of FIG. 1 will carry the same reference numerals, and an explanation thereof is omitted as occasion demands.

In FIG. 8, if storing the peak value P3pk (the step S104), the ECU 100 stores a peak value Qcpk of the air flow quantity Qc while updating it, as occasion demands (step S201). Incidentally, a concept of the peak value associated with the air flow quantity Qc is the same as in the case of the supercharging pressure P3.

On the other hand, in the step S105, if the peak deviation is greater than the predetermined value B (the S105: YES), the ECU 100 calculates a peak deviation (i.e. Qcpk-Qc) of the air flow quantity Qc and determines whether or not the calculated peak deviation is less than or equal to a predetermined value D (step S202). If the calculated peak deviation is less than or equal to the predetermined value D (the step S202: YES), the ECU 100 further determines whether or not an air flow quantity deviation (i.e. Qim-Qc), which is a deviation between an intake manifold air flow quantity Qim and the air flow quantity Qc, is less than or equal to a predetermined value E (step S203).

Here, the air flow quantity Qim of the intake manifold 208 is calculated, firstly by calculating air density from each sensor value of the intake manifold pressure Qim and the intake manifold intake air temperature Tim, and secondly by performing arithmetic processing based on the calculated air density, the engine rotational speed Ne of the engine 200, the displacement of the engine 200, and volumetric efficiency of the engine 200. Incidentally, the detailed formula for computation of the intake manifold air flow quantity Qim is unrelated to the summary of the embodiment, and an explanation thereof is thus omitted.

If the air flow quantity deviation is less than or equal to the predetermined value E (the step S203: YES), the ECU 100 determines that the diffuser vanes 308 is in the close-side fixing state (the step S106).

As described above, in the embodiment, in addition to that the peak deviation of the supercharging pressure P3 is greater than the predetermined value B, the condition that the peak deviation of the air flow quantity Qc is less than or equal to the predetermined value D and the condition that the difference (the air flow quantity deviation) between the air flow quantity Qim of the intake manifold 208 and the air flow quantity Qc detected by the air flow meter 209 is less than or equal to the predetermined value E are the determination criteria associated with the close-side fixing of the diffuser vanes 308.

On the other hand, in the step S202, if the peak deviation of the air flow quantity Qc is greater than the predetermined value D (the step S202: NO), the ECU 100 makes an abnormality determination indicating that there is hardware failure in the turbocharger 300 (step S205). On the other hand, in the step S203, if the air flow quantity deviation is greater than the predetermined value E (the step S203: NO), the ECU 100 makes an abnormality determination indicating that there is intake leakage on the downstream side of the VGC (step S204).

More specifically explaining it, if there is intake leakage in the intake tube 205 located on the downstream side of the VGC for reasons, for example, that there is a hole in a tube wall portion, that there is seal leakage in a connection site between intake tubes via a coupler, a flange or the like, and that a hose comes out in one portion of an intake passage, or for similar reasons, then, the deviation in the air flow quantity increases between the intake manifold 208 and the intake tube 205 on the VGC upstream side. Therefore, if an appropriate value which enables the accurate determination of the intake leakage is set as the predetermined value E while avoiding erroneous determination on an experimental, experiential, theoretical, or simulation basis or the like in advance, it is possible to accurately determine that the intake leakage triggers the reduction in the supercharging pressure P3, which is supposedly caused by the close-side fixing of the diffuser vanes 308 in the first embodiment.

Moreover, if there is hardware abnormality in the turbocharger 300 of a larger scale than the variable vane mechanism, such as damage, breakage, or destruction of the turbine blade 302, bearing seizing of the turbo rotating shaft 305, or damage, breakage, or destruction of the compressor impeller 307, then, the compressor impeller 307 is not normally rotationally driven in any case, and thus, the air flow quantity Qc decreases almost instantaneously at a time point at which this type of abnormality occurs. Therefore, the air flow quantity Qc decreases which is originally not supposed to decrease from the peak value Qcpk in the target supercharging pressure increasing period. Therefore, if an appropriate value which enables the accurate determination of the hardware abnormality in the turbocharger 300 is set as the predetermined value D while avoiding erroneous determination on an experimental, experiential, theoretical, or simulation basis, or the like in advance, it is possible to accurately determine that the more serious hardware failure in the turbocharger 300 triggers the reduction in the supercharging pressure P3, which is supposedly caused by the close-side fixing of the diffuser vanes 308 in the first embodiment.

### <Third Embodiment>

In each of the embodiments described above, the portions associated with the abnormality determination of the turbocharger 300 were described. Considering that the accurate abnormality determination about the turbocharger 300 can be performed, there can be a practical meaning in taking a fail-safe measure corresponding thereto.

Now, as a third embodiment of the present invention, an explanation will be given to a measure when the close-side fixing of the diffuser vanes 308 occurs. The measure is preferably operated by fail-safe control performed by the ECU 100. Incidentally, in the third embodiment, the ECU 100 functions as another example of the "controller" of the present invention.

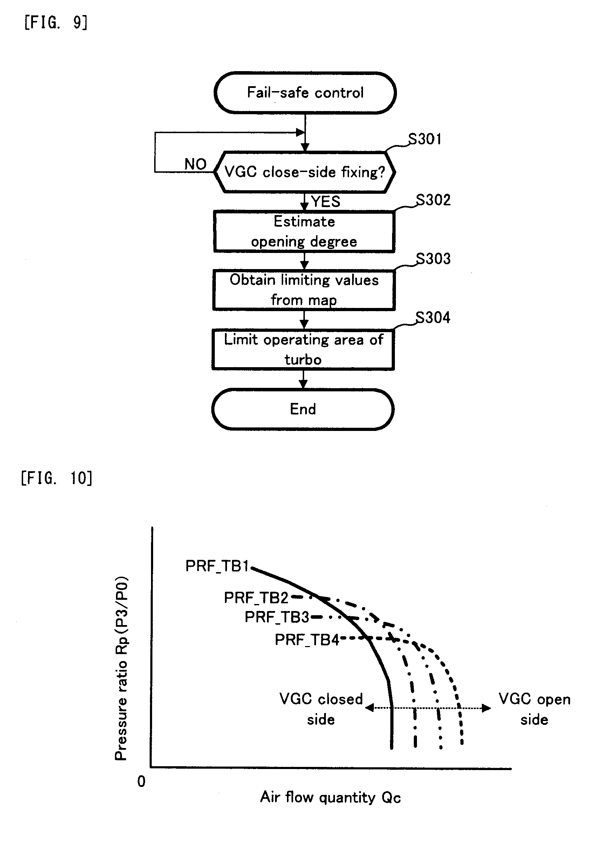

Now, with reference to FIG. 9, the details of the fail-safe control in the third embodiment of the present invention will be explained. FIG. 9 is a flowchart illustrating the fail-safe control.

In FIG. 9, the ECU 100 determines whether or not the determination that the close-side fixing occurs in the diffuser vanes 308 is made (step S301). The determination can be easily performed, for example, by taking a measure, such as setting a proper flag upon determination of the close-side fixing of the diffuser vanes 308, in the abnormal determination control in the first or second embodiment described above.

If the close-side fixing does not occur in the diffuser vanes 308 (the step S301: NO), the ECU 100 repeats the processing in the step S301 until the step S301 branches to a "YES" side, i.e. until the close-side fixing occurs in the diffuser vanes 308.

On the other hand, if the close-side fixing occurs in the diffuser vanes 308 (the step S301: YES), the ECU 100 estimates the diffuser vane opening degree Adfs (step S302). At this time, the ECU 100 estimates the diffuser vane opening degree Adfs on the basis of the supercharging pressure P3 and the air flow quantity Qc at that time point. Incidentally, a relation between the diffuser vane opening degree Adfs and the supercharging pressure P3 (or pressure ratio Rp) and a relation between the diffuser vane opening degree Adfs and the air flow quantity Qc are as already exemplified in FIG. 3. The diffuser vane opening degree Adfs is preferably estimated by selecting an opening degree corresponding to the supercharging pressure P3 and the air flow quantity Qc at that time point from among the plurality of diffuser vane opening degrees Adfs (although FIG. 3 exemplifies only the two types, actually, the plurality of opening degrees are set, as described above), or by performing interpolation or similar actions, as occasion demands.

If estimating the diffuser vane opening degree Adfs, the ECU 100 refers to a restriction map stored in the ROM in advance and obtains limiting values of the pressure ratio Rp (or the supercharging pressure P3) and the air flow quantity Qc (step S303). If obtaining the limiting values, the ECU 100 limits the operation of the turbocharger 300 on the basis of the obtained limiting values (step S304). The fail-safe control is performed in this manner.

Now, with reference to FIG. 10, the details of the restriction map will be explained. FIG. 10 is a schematic diagram illustrating the restriction map.

In FIG. 10, a vertical axis represents the pressure ratio Rp, and a vertical axis represents the air flow quantity Qc. On a coordinate plane thereof, the limiting values are expressed as a limit line PRF_TBi (i=1, 2, 3, and 4) for each diffuser vane opening degree Adfs.

The ROM stores therein the restriction map in which the limit line illustrated in FIG. 10 is quantified in advance. The ECU 100 limits the operation of the turbocharger 300 in accordance with the limit line corresponding to the estimated diffuser vane opening degree Adfs in the step S104. More specifically, the ECU 100 prohibits the operation of the turbocharger 300 on a higher-load side (a side on which Qc is large) and on a higher-supercharging-pressure side (a side on which Rp is large) than the relevant limit line. In limiting the operation of the turbocharger 300, if an exhaust bypass valve is provided on the exhaust side, the drive control of the exhaust bypass valve may be performed. If an intake bypass valve is provided on the intake side, the drive control of the intake bypass valve may be performed. Alternatively, a fuel injection amount may be limited in the engine 200.

As described above, according to the third embodiment, if it is determined that there is the close-side fixing of the diffuser vanes 308, the operation of the turbocharger 300 can be limited in accordance with the diffuser vane opening degree Adfs upon fixing. This makes it possible to operate the turbocharger 300, maximally efficiently in an allowed range while certainly preventing the occurrence of the choking caused by the close-side fixing of the diffuser vanes 308. In other words, the preferable fail-safe is realized.

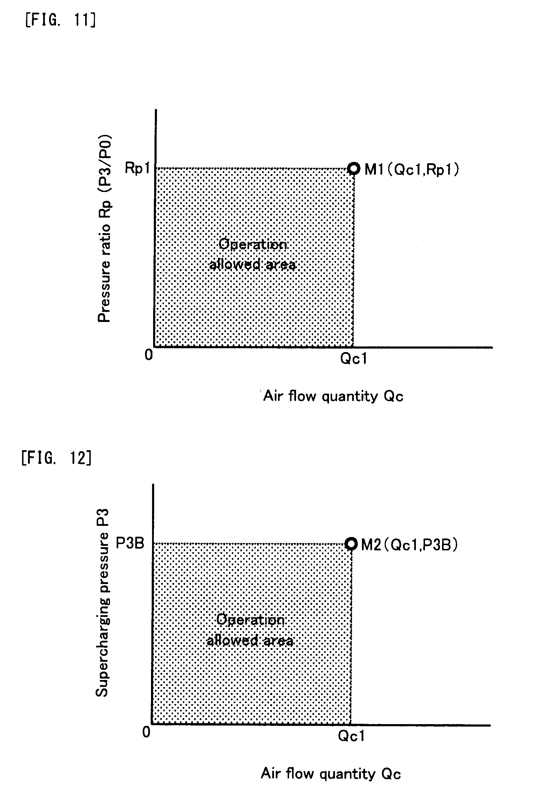

Incidentally, as the restriction map, there are possible maps other than the map illustrated in FIG. 10. Now, with reference to FIG. 11 and FIG. 12, other aspects of the restriction map will be explained. FIG. 11 is another schematic diagram illustrating the restriction map. FIG. 12 is yet another schematic diagram illustrating the restriction map.

In FIG. 11, on a coordinate plane in which the pressure ratio Rp is placed on a vertical axis and the air flow quantity Qc is placed on a horizontal axis, an operation allowed area of the turbocharger 300 is illustrated as a hatching area. The operation allowed area is, for example, a rectangle area having, as a vertex, one operating point of the turbocharger 300, which is defined by the pressure ratio Rp and the air flow quantity Qc at the time point at which it is determined that there is the close-side fixing of the diffuser vanes 308 in the first or second embodiment or the like.

FIG. 11 illustrates a case where the operating point is an illustrated operating point M1 (Qc1, Rp1). In this case, an allowable maximum value (i.e. limiting value) of the air flow quantity Qc is Q1, and an allowable maximum value (i.e. limiting value) of the pressure ratio Rp is Rp1. The turbocharger 300 is allowed to operate only in an operating area which is less than or equal to the allowed maximum values (i.e. operation allowed area). Incidentally, the ROM stores therein the restriction map in which a relation illustrated in FIG. 11 is quantified.

If the restriction map is set in this manner, the operation restriction is given using the pressure ratio Rp and the air flow quantity Qc at that time point as the maximum values. Thus, it is possible to operate on a safer side than the operation restriction which requires the intervention of an estimated value as exemplified in FIG. 10.

In FIG. 12, on a coordinate plane in which the supercharging pressure P3 is placed on a vertical axis and the air flow quantity Qc is placed on a horizontal axis, an operation allowed area of the turbocharger 300 is illustrated as a hatching area. The operation allowed area is, for example, a rectangle area having, as a vertex, one operating point of the turbocharger 300, which is defined by the pressure ratio Rp and the air flow quantity Qc at the time point at which it is determined that there is the close-side fixing of the diffuser vanes 308 in the first or second embodiment or the like.

FIG. 12 illustrates a case where the operating point is an illustrated operating point M2 (Qc1, P3B). In this case, an allowable maximum value (i.e. limiting value) of the air flow quantity Qc is Q1, and an allowable maximum value (i.e. limiting value) of the supercharging pressure P3 is P3B. The turbocharger 300 is allowed to operate only in an operating area which is less than or equal to the allowed maximum values (i.e. operation allowed area). Incidentally, the ROM stores therein the restriction map in which a relation illustrated in FIG. 12 is quantified.

If the restriction map is set in this manner, the operation restriction is given using the supercharging pressure P3 and the air flow quantity Qc at that time point as the maximum values. Thus, it is possible to operate on a safer side than the operation restriction which requires the intervention of the estimated value as exemplified in FIG. 10.

### <Fourth Embodiment>

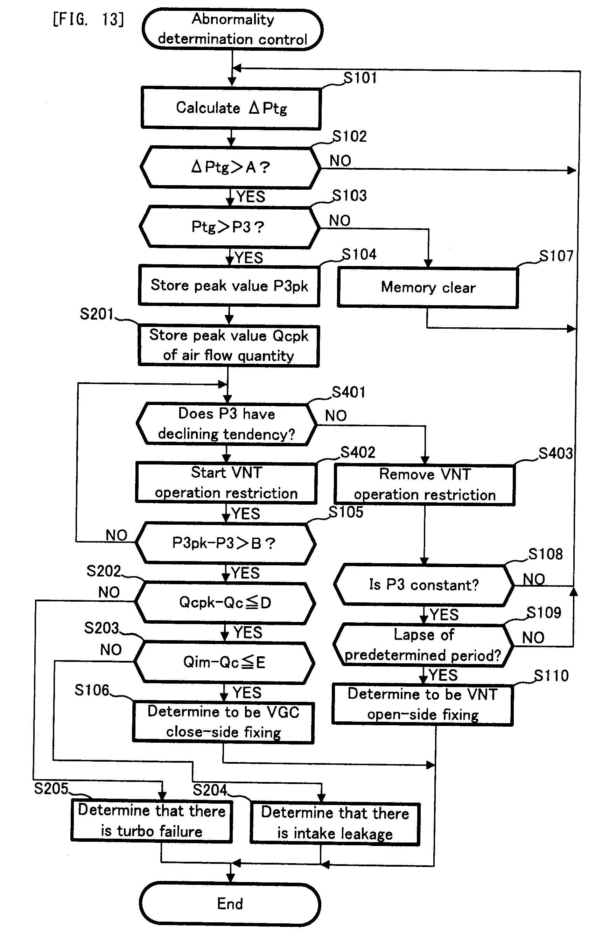

Next, with reference to FIG. 13, an explanation will given to abnormality determination control in a fourth embodiment in which the turbocharger 300 can be protected more preferably than the abnormality determination control in the first and second embodiments. FIG. 13 is a flowchart illustrating the abnormality determination control in the fourth embodiment. Incidentally, in FIG. 13, portions overlapping those of FIG. 8 will carry the same reference numerals, and an explanation thereof is omitted as occasion demands.

In FIG. 13, if starting to store the air flow quantity Qcpk in the step S201 (the step S201), the ECU 100 determines whether or not the supercharging pressure P3 has a declining tendency (step S401). Here, the "declining tendency" means that the supercharging P3 is less than the previous detected value. From the viewpoint of more flexible operation, the declining tendency may mean that the deviation from the previous value is greater than or equal to a value corresponding to a detection error of the sensor.

If the supercharging pressure P3 has the declining tendency (the step S401: NO), the ECU 100 starts VNT operation restriction (step S402). Here, the VNT operation restriction means a measure of prohibiting an opening degree change of the nozzle vanes 303 provided for the VNT. In other words, in the step S402, the nozzle vane opening degree Anzl, which is an opening degree of the nozzle vanes 303, is maintained at a value at that time point. Incidentally, the operation in the step S402 is another example of the operation of the "controller" of the present invention.

If the VNT operation restriction is started, the processing is moved to the step S105. In the step S105, if the peak deviation of the supercharging pressure P3 is less than or equal to B (the step S105: NO), the processing is returned to the step S401. In other words, as long as the declining tendency of the supercharging pressure P3 continues, the VNT operation restriction is also continued.

In the course that the declining tendency of the supercharging pressure P3 continues, if the peak deviation of the supercharging pressure P3 exceeds B (the step S105: YES), the processing operations after the step S202 after the step S202 are performed. Here, if some abnormality determination is completed in any of the steps S106, S204, and S205, the VNT operation restriction is removed. In this case, however, the turbocharger 300 ends up not functioning normally, and it is thus preferable to take some fail-safe measure. The VNT operation restriction may be restarted or continued as a part of this type of fail-safe measure.

On the other hand, in the step S401, if the supercharging pressure P3 does not have the declining tendency (the step S401: NO), i.e. if the supercharging pressure P3 is increasing to follow the target supercharging pressure Ptg, or is stagnant, the ECU 100 removes the VNT operation restriction under the assumption that at least the intake side is unlikely abnormal (step S403). If the VNT operation restriction is removed, the processing is moved to the step S108.

As described above, in the abnormality determination control in the fourth embodiment, the opening degree change of the nozzle vanes 303 of the VNT is prohibited in a determination period as a period from a time point at which the actual supercharging pressure P3 shows the declining tendency until some abnormality determination is completed. Therefore, by driving the nozzle vanes 303 further to the valve closing side under a normal control aspect of the VNT or by performing similar actions in the determination period, it is prevented that the turbocharger 300 falls into an over-speed state. Therefore, the turbocharger 300 can be preferably protected.

Incidentally, of course, the determination period is a period of performing the abnormality determination of the VGC, and is a period corresponding to a so-called gray zone in which the VGC is not necessarily abnormal. If, however, the operation of the VNT is not limited in this period and if, for example, the nozzle vane opening degree Anzl is controlled further to the valve closing side to promote increased rotation of the turbocharge 300, and if the VGC is truly in an abnormal state, the turbocharger 300 is in the over-speed state, which is not preferable. On the other hand, the determination period is a short period as an absolute value on an actual time axis. Even if the operation of the VNT is limited in this period, its practical influence on power characteristics can be ignored.

Moreover, in cases where the supercharging pressure P3 temporarily shows the declining tendency due to temporal VGC operation failure or the like, even if the VNT operation restriction is started, the VNT operation restriction is quickly removed by that the step S401 branches to the "NO" side. Therefore, there is no problem in actually operating the turbocharger 300.

The present invention is not limited to the aforementioned embodiments, but various changes may be made, if desired, without departing from the essence or spirit of the invention which can be read from the claims and the entire specification. An apparatus for controlling an internal combustion engine, which involves such changes, is also intended to be within the technical scope of the present invention.

### Industrial Applicability

The present invention can be applied to an internal combustion engine provided with a supercharger having vane mechanisms for adjusting supercharging pressure on the intake side and the exhaust side.

**Description of Reference Codes**

| | |
|---|---|
| 10 | engine system |
| 100 | ECU |
| 200 | engine |
| 202 | cylinder |
| 204 | exhaust tube |
| 205 | intake tube |
| 302 | turbine blade |
| 303 | nozzle vane |
| 307 | compressor impeller |
| 308 | diffuser vane |

## Claims

1. An apparatus for controlling an internal combustion engine, the internal combustion engine comprising:
a supercharger comprising a turbine disposed on an exhaust passage, having an exhaust-side variable vane mechanism capable of adjusting exhaust pressure in accordance with its opening / closing state, and a compressor disposed on an intake passage, having an intake-side variable vane mechanism in a diffuser part of the compressor, capable of adjusting an air flow quantity in accordance with its opening / closing state; and
a detecting device capable of detecting actual supercharging pressure of the supercharger on a downstream side of the compressor,
said apparatus comprising:
a controller which is configured to specify a time transition of the detected actual supercharging pressure in a period in which a change speed of target supercharging pressure of the supercharger is greater than or equal to a predetermined value and determine abnormality of at least one of the turbine and the compressor on the basis of the specified time transition.

2. The apparatus for controlling the internal combustion engine according to claim 1, wherein
said controller specifies, as the time transition, an amount of reduction of the detected actual supercharging pressure with respect to a peak value of the detected actual supercharging pressure, and
said controller determines that the compressor is abnormal if the specified amount of reduction is greater than or equal to a predetermined value.

3. The apparatus for controlling the internal combustion engine according to claim 2, wherein
said controller starts the abnormal determination of the compressor if the detected actual supercharging pressure has a declining tendency in the period, and
said controller is further configured to prohibit an opening degree change of the exhaust-side variable vane mechanism in a determination period in which said abnormality determination of the compressor is performed.

4. The apparatus for controlling the internal combustion engine according to claim 1, wherein
said controller specifies, as the time transition, a change amount of the actual supercharging pressure in a predetermined period, and
said controller determines that the turbine is abnormal if the detected actual supercharging pressure is less than the target supercharging pressure and if the specified change amount is less than a predetermined value.

5. The apparatus for controlling the internal combustion engine according to claim 1, wherein
said controller specifies, as the time transition, a deviation of the detected actual supercharging pressure with respect to the target supercharging pressure, and
said controller further determines an abnormality occurrence point in the compressor on the basis of the air flow quantity and the specified deviation if it is determined that the compressor is abnormal.

6. The apparatus for controlling the internal combustion engine according to claim 5, wherein
said controller determines at least presence or absence of close-side fixing of the intake-side variable vane mechanism.

7. The apparatus for controlling the internal combustion engine according to claim 6, wherein
said controller is further configured to specify an opening degree of the intake-side variable vane on the basis of a front-to-back pressure ratio of the compressor and the air flow quantity if it is judged that there is the close-side fixing in the intake-side variable vane mechanism and correct at least one of the actual supercharging pressure and the air flow quantity in accordance with the specified opening degree.
